(19) Europäisches Patentamt
European Patent Office
Office européen des brevets

(11) EP 4 468 212 A1

(12) EUROPEAN PATENT APPLICATION

(43) Date of publication:
**27.11.2024  Bulletin 2024/48**

(21) Application number: **23382483.8**

(22) Date of filing: **24.05.2023**

(51) International Patent Classification (IPC):
**G06N 20/00** (2019.01)   **G06N 5/025** (2023.01)

(52) Cooperative Patent Classification (CPC):
**G06N 20/00; G06N 5/025**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Telefonica Innovacion Digital SL**
**28050 Madrid (ES)**

(72) Inventors:
• **Moya García, Ricardo**
**28013 Madrid (ES)**

• **Salvatori, Matteo**
**28013 Madrid (ES)**
• **Villaizán Vallelado, Mario**
**28013 Madrid (ES)**
• **Fernandez Escribano, Enrique**
**28013 Madrid (ES)**
• **Arranz Lopez, Alejandro Manuel**
**28013 Madrid (ES)**
• **Martin Martinez, Manuel**
**28013 Madrid (ES)**

(74) Representative: **Carlos Hernando, Borja**
**Garrigues IP, S.L.P.**
**Hermosilla, 3**
**28001 Madrid (ES)**

(54) **METHOD, SYSTEM AND COMPUTER PROGRAMME FOR DETERMINING THE EXPLAINABILITY OF A DATA SET**

(57)   The invention relates to a method, system, and computer programmes for determining the explainability of a data set. The method comprises receiving/accessing a data set with elements, wherein each element comprises variables, including at least two predictor variables and one target variable; providing an explanation of how a complex function F(X) generates the target variable from the predictor variables X, using a linear surrogate model $g(Z') = \varphi_0 + \sum_{i=1}^{M} \varphi_i z_i'$ that satisfies $F(X) = g(Z') = g(h(X))$. $\varphi_i$ are the coefficients of the surrogate model, representing the contribution of dummy variables $z_i'$ to a result of the surrogate model, and coinciding with Shapley values,

$$\varphi_i(v) = \sum_{S \subseteq M\{i\}} \frac{|S|!(M-|S|-1)!}{M!} (v(S \cup \{i\}) - v(S)),$$

and $v(S) = E[F(X_{\bar{S}}, X_S)|X_S]$. $v(S)$ is calculated without assuming independence between the predictor variables, taking only the elements of the data set for which the predictor variables assume the values for which their contribution to the value of the target variable is to be estimated.

**Fig. 1**

EP 4 468 212 A1

**Description**

Technical field

The present invention relates to a method, system and computer programmes for determining the explainability of data sets.

Background of the invention

The explainability of Artificial Intelligence (AI) models is the ability to relate the decision made by the model with the information used to make the decision. In other words, it relates the importance or contribution of the input variables to the model with the decision (prediction) made by the model.
Furthermore, the concept of interpretability corresponds to explainability that can be understood by humans. Something interpretable is explainable, but something explainable is not necessarily interpretable, since explainability is not always logical and a human is not able to interpret it.
There are currently 3 methods in the context of AI model explainability:

1. Model non-agnostic methods
2. Model agnostic methods
3. Model specific methods

In turn, these methods can be classified according to the type of data used by the AI models, said data being:

- Data agnostic: they explain AI models that make use of any type of data (tables, images, videos, texts, etc.)
- Data specific: they explain AI models that use only one specific type of data.

Some of the main features of explainability methods are described below:

1. Model non-agnostic methods:

They are explainability methods applicable to transparent AI models, i.e., to models that are self-explainable, such as: linear or logistic regression which parameters indicate the contribution of the independent variables, CART (Classification And Regression Trees) which node hierarchy indicates which variables are most relevant, or models created from the Naive Bayes learning algorithm in which the conditional probabilities of the model can explain which variables are more relevant and which ones are less relevant.

2. Model agnostic methods:

They are "post-hoc" explainability methods or reverse engineering methods applicable to any type of AI model, although they are mainly used to explain opaque (non-transparent) AI models such as Neural Networks, Bagging, Boosting, etc.
These methods obtain explainability by "interrogating" the model. They can do so with samples of the training data itself or by creating new synthetic elements (non-real data) by modifying variables, performing data permutations, etc., and they ask the AI model to calculate the prediction for these new synthetic elements, i.e., they interrogate the model with synthetic elements. Based on the predictions that would be expected to be obtained from these synthetic elements and those that are actually obtained by interrogating the AI model, the explainability methods calculate the importance or contribution of the AI model to each of the variables when calculating their predictions.
These methods can calculate the contribution of the variables locally (local explainability), i.e., calculating the contribution of the variables for each of the individual predictions, or globally (global explainability), calculating the contribution of the variables taking into account all the predictions made by the model.
Two of the best-known implementations for these explainability methods are LIME (Local Interpretable Model-Agnostic Explanations) and SHAP (SHapley Additive exPlanations).

3. Model specific methods:

They are explainability methods that work in a manner *similar to Model Agnostic Methods,* but in this case they are only applicable to AI models created by specific learning algorithms, such as neural networks, XGBoost, etc.
Since the features of the learning algorithm used are known in advance, they make specific assumptions about the generated AI model to calculate its explainability.

Explainability methods of this type tend to perform better than the rest of the methods, but they have the drawback that they are only applicable to AI models created by very specific learning algorithms.

AI explainability methods are computationally very expensive and in order to alleviate the computational load, they must make certain assumptions about the data to obtain the explainability of the AI models, reducing the quality of the explanations. Assumptions, such as the independence between variables made by SHAP, means that it has to create synthetic elements (non-real data) and interrogate the AI model to see what decision it would make with said synthetic elements. Therefore, to obtain explainability with the existing implementations of these methods, it is necessary to have the training data set and the AI model.

When an AI model is not available, the explainability of a data set cannot be obtained with the current implementations. For this reason, the present invention proposes a novel explainability method that only depends on the data set and on the decisions (target); i.e., it is not necessary to have the model that made the decisions. To do this, the invention obtains local explanations by creating surrogate models, without making any assumptions about the origin of the data, which makes the creation of the surrogate models more complex (computationally), but increases the quality of explainability as long as the data set is representative.

Moreover, many of the current AI products are semi-autonomous, i.e., an AI model makes a series of decisions and some of them are modified by a system of rules (business rules). AI models could only be explained with the current solutions (such as SHAP and LIME), since these implementations require the AI model to "interrogate" it and obtain explainability. Moreover, current AI products could not be explained with current solutions. For this reason, the need arises to have a method capable of explaining the decisions made by any model (AI, rules, reality, etc.) based solely on data and decisions; i.e., the model is not needed to obtain explainability.

Disclosure of the invention

To this end, the present invention provides a local explainability method for data sets, for example, table data, also known as LIDE (Local Interpretable Data Explanations), which does not make any assumption about the dependent variable (target) to be explained. For each element of the data set, the method estimates the contribution of each of the independent variables to obtain the value of the target.

The present invention, like SHAP and LIME, performs calculations to obtain local explainability, based on surrogate models, obtaining for each element of the data set a linear model that is self-explainable based on its parameters. However, the present invention (based on SHAP) does not make any assumption about the origin of the data (it does not assume independence between variables), proposing a computationally more complex calculation method that improves the quality of the explanation as long as the data set is representative.

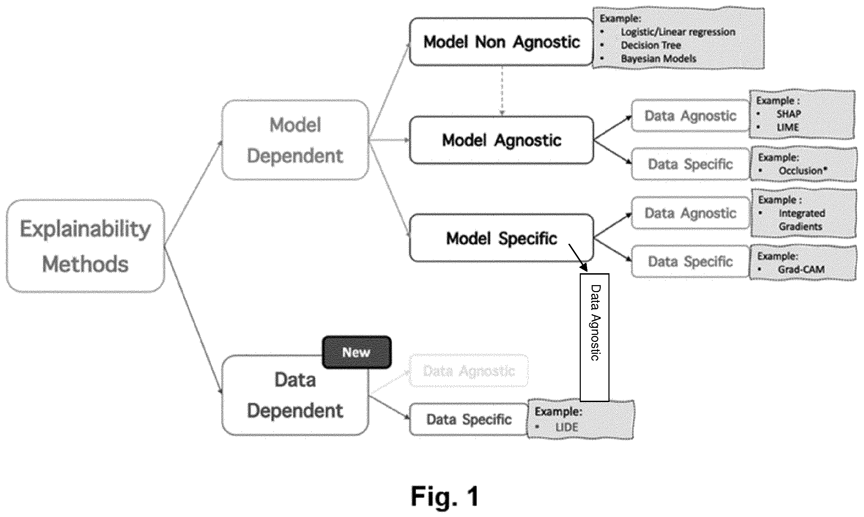

Therefore, the present invention gives rise to the definition of a new taxonomy (see Figure 1), differentiating the explainability methods by:

- Model dependent: methods that explain the decisions made by a model.
- Data dependent: methods that explain the decisions based on data.

Exemplary embodiments of the present invention provide, according to a first aspect, a computer-implemented method for determining the explainability of a data set. The method comprises performing the following steps by at least one processor: receiving or accessing a data set comprising a plurality of elements, wherein each element of the plurality of elements comprises a plurality of variables, of which at least two variables are taken as predictor variables and one variable is considered as a target variable, and wherein the predictor variables are categorical or discretised variables; providing an explanation of how a complex function F(X) generates the target variable from the predictor variables X, using a linear surrogate model: $g(Z') = \varphi_0 + \sum_{i=1}^{M} \varphi_i z_i'$ that satisfies $F(X) = g(Z') = g(h(X))$, where: $Z' = h(X)$ is a function that maps the predictor variables X used by the complex function F(X) to be explained with dummy variables $z_i'$ used to generate the explanation; M is the number of dummy variables, $i$ is the index over the dummy variables, $\varphi_i$ are the coefficients of the surrogate model, representing the contribution of the dummy variables $z_i'$ to a result of the surrogate model, and coinciding with Shapley values, calculated as $\varphi_i(v) = \sum_{S \subseteq M\{i\}} \frac{|S|!(M-|S|-1)!}{M!} (v(S \cup \{i\}) - v(S))$

, and $v(S) = E[F(X_{\bar{S}}, X_S)|X_S]$, where: $S: X_s \equiv \{x_1, x_2, ..., x_S\} \subseteq X$ is a coalition formed by the predictor variables, $|S|$ is the number of predictor variables in the coalition $S$, $\bar{S}: X_{\bar{S}} = \{X\} - \{X_S\}$ is a set of complementary variables to $S$, $v(S)$ is an estimate of the result of the complex function F(X) if it had been generated using only the variables of the coalition S, and $P(X_{\bar{S}} | X_S)$ is the probability of $X_{\bar{S}}$ conditioned by $X_S$.

Unlike the known solutions, in the proposed method $v(S)$ is calculated without assuming independence between the predictor variables, taking only the elements of the data set for which the predictor variables assume the values for which their contribution to the value of the target variable is to be estimated, where the data set is large enough for this to happen at least 3 times.

Other embodiments of the invention which are disclosed herein also include a system and computer programme products for performing the steps and operations of the method proposed in the first aspect of the invention. More particularly, a computer programme product is an embodiment that has a computer-readable medium including computer programme instructions coded therein which, when executed in at least one processor of a computer system, cause the processor to perform the operations indicated herein as embodiments of the invention.

In some embodiments, wherein $v(S)$ is calculated according to

$$v(S) = \frac{\sum_{j=1}^{K} F\left(DX_S^j, DX_{\bar{S}}^j\right) * \delta_{DX_S, DX_S^j}}{\sum_{j=1}^{K} \delta_{DX_S, DX_S^j}}$$

, where:

$DX_S^j = discretise(X_S^j)$ is the discretised version of the variables that enter the coalition S, $DX_{\bar{S}}^j = discretise(X_{\bar{S}}^j)$ is the discretised version of the variables that do not enter the coalition S, $K$ is the size of the data set used for the estimates, $j$ is the index over the data set used for the estimates, and $\delta_{DX_S, DX_S^j}$ is the Kronecker delta that is equal to 1 when the variables of the coalition of the j-th element of the data set assume the values for which their contribution to the value of the target variable is to be estimated, and where $K$ is large enough for the Kronecker delta $\delta_{DX_S, DX_S^j}$ to equal 1 at least 3 times.

In some exemplary embodiments, the data in the data set comprises tabular data.

According to the present invention, the variables can be real data, output data from a machine learning model, output data from a system of rules, output data from a decision system, or combinations thereof.

The present invention, as long as a representative data set is available, offers better quality of explainability compared to existing methods, since it does not make any assumptions about the origin of the data and does not alter them to obtain explainability.

The implementation of the present invention has been tested and compared with other libraries that implement explainability methods (SHAP and LIME) and the computation times of the proposed method have always been better or equal to the computation times of other implementations.

The possibility of obtaining the explainability of an AI model is essential to enable the use of the model in a real application, since without knowing the explainability, there are no guarantees as to whether the model will exhibit biases that make it unfeasible for practical use. The proposed method makes it possible to obtain this explainability in circumstances in which no other model does, for example, in circumstances where there is no access to the model itself, but only access to the data with which the model has been trained and to the result (prediction) of its application. Therefore, the proposed method has the technical advantage of enabling the practical use of certain AI models which feasibility depends on their explainability.

Brief description of the drawings

The foregoing and other features and advantages will be more fully understood from the following detailed description, by way of mere illustration and not limitation, of some exemplary embodiments with reference to the attached drawings, wherein:

Figure 1 shows the new taxonomy of the explainability methods proposed by the present invention.

Figure 2 shows an example of application of the proposed method, wherein for each row of the data set, the method provides an explanation of how each predictor variable influences the value of the target variable.

Figures 3A-3E graphically show an example of how the SHAP method performs the approximation of independence between variables. Figure 3A joint probability distribution $P(x_1, x_2)$; Figure 3B sample compatible with the joint probability $P(x_1, x_2)$; Figure 3C result of applying an opaque binary model on the data set; Figure 3D obtaining new simulated data from the original data: the value of $x_1$ is modified independently of the value of $x_2$; Figure 3E result of applying the opaque model on the new simulated data.

Figure 4 graphically shows the calculation of the "coalition worth" using the proposed method.

Detailed description of the invention and exemplary embodiments

The present invention provides a local explainability method for data sets, also known as LIDE, that does not make any assumptions about the origin of the target variable to be explained.

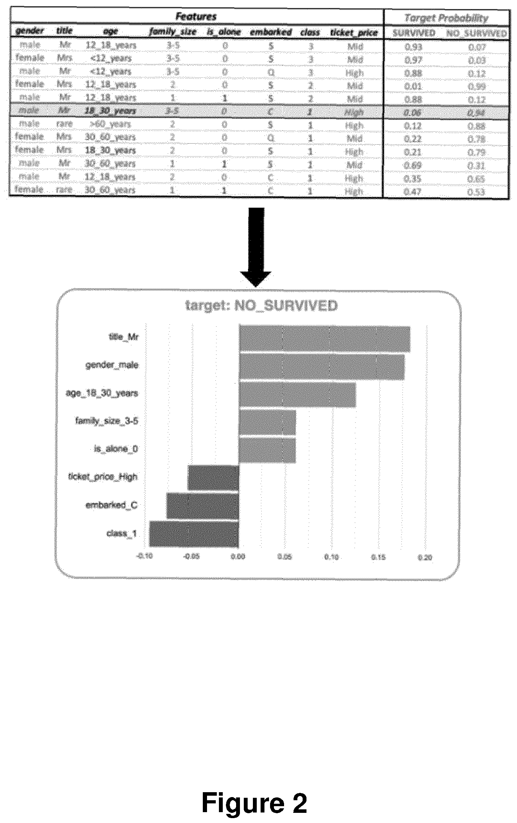

In a particular exemplary embodiment of the present invention, the data in the data set is tabular data, such that the predictor variables and the target variable refer to 'columns'. In other words, according to this particular exemplary embodiment, the proposed method does not make any assumptions about the origin of the target column to be explained. For example, as shown in Figure 2, given a data set with "n" predictor columns (features), where "n" is at least two, and a target column (i.e., a column to be explained), the proposed method makes it possible to estimate how the predictor columns influence the value of the target column, i.e., the contribution of the predictor variables to the value of the target variable. Since it is a local explainability method, the proposed method provides an independent and personalised estimate for each row of the data set, i.e., of the table.

The target variable/column to be explained can be any variable/column, for example, real data, the output from a machine learning model, the output from a system of rules, the result of decisions by a marketing team, or even a mix thereof. In other words, the proposed method and its implementation are not limited to cases in which the column to be explained is the result of a model or a mathematical function.

The target variable/column can be either a continuous variable (e.g., height, weight, price) or a categorical variable (e.g., gender, profession, city, etc.). A categorical target is oriented towards explaining the output of classification problems (recommendations, marketing decisions, etc.), for example: {I sell, I do not sell}, {it wins, it loses}, {1, X, 2}, etc. On the other hand, a continuous target allows explaining regression problems, for example: prediction of the price of a house, value of a share, etc.

The requirement for the application of the proposed method is that the predictor variables/columns are categorical or discretised variables (i.e., they assume only a finite number of values) or there is mapping between the original continuous value and a set of finite values. An example of mapping could be discretizing a continuous variable using quantiles. For simplicity of discussion throughout the rest of the document, it will be assumed that all the predictor variables are categorical or discretised.

As previously indicated, the proposed method belongs to the family of local explainability methods based on *surrogate models,* i.e., interpretable (linear) models that are used to explain the individual predictions of black box AI models, for example: neural networks, boosting, bagging, etc. (see, Interpretable ML book https://christophm.github.io/interpretable-ml-book/ for more details). Likewise, the proposed method is based on SHAP, but without making any assumptions about the origin of the data.

In this context, given an opaque model or a complex function F(X), for each *X* in the data set, a local model $g(Z') = g(h(X))$ is defined that is explainable (for example, a linear model) and that locally approximates the opaque model or the complex function to be explained. More formally, for each tuple of variables $X = \{x_1, x_2, \ldots, x_N\}$ of the domain of *F(X),* there is a linear surrogate model

$$g(Z') = \varphi_0 + \sum_{i=1}^{M} \varphi_i z_i{}'$$

that satisfies:

$$F(X) = g(Z') = g(h(X))$$

where:

- $Z' = h(X)$ is the mapping between predictor variables X used by the opaque model and dummy variables $Z'$ used to generate the explanation. For example, if the original variable is $x \in \{a, b, c\}$, the associated dummy variables are

$$z_a' = h(x = a) = [1, 0, 0], \; z_b' = h(x = b) = [0, 1, 0], \; z_c' = h(x = c) = [0, 0, 1]$$

- *M* is the number of dummy variables used to generate the explanation of the prediction of the opaque model.

As demonstrated in the article *"A Unified Approach to Interpreting Model Predictions",* when in addition to local Accuracy (a property that dictates that the prediction of the surrogate model g(z') has to be the same as the prediction given by the model to be explained F(x)), the Missingness properties are enforced (property that dictates that if a dummy

variable $z'_i$ of the surrogate model does not exist in the coalition ($z'_i = 0$), then its coefficient $\varphi_i$ will have zero value, $z'_i$ = 0 => $\varphi_i = 0$)) and Consistency (given 2 surrogate models $g_x(z')$ and $g_x'(z')$ where the variable $z'_{-j}$ indicates that there is no such dummy variable ( $z'_j = 0$ ), the property of consistency states that if a model changes in such a way that the marginal contribution of the value of a feature increases or remains the same, the coefficient $\varphi_j$ also increases or remains the same $g_x'(z') - g_x'(z'_{-j}) \geq g_x(z') - g_x(z'_{-j}) \ \forall z' \in \{0,1\} \mid \varphi_j(g',x) \geq \varphi_j(g,x))$ , the coefficients $\varphi_i$ of the linear surrogate model coincide with the Shapley values:

$$\varphi_i(v) = \sum_{S \subseteq M\{i\}} \frac{|S|!\,(M - |S| - 1)!}{M!} \left( v\left(S \bigcup\{i\}\right) - v(S) \right) \ Eq.\,1$$

In the formula of the Shapley values, $S$ are the coalitions, i.e., groups, of features, $M$ is the number of features, $v(S)$ is the "coalition worth" function which can be interpreted as an estimate of the prediction of the opaque model or complex function $F(X)$ if it had been generated using only the variables of the coalition S.

The "coalition worth" $v(S)$ can be calculated as the expected value of the prediction of the opaque model conditioned by the presence of the coalition variables in the model input:

$$v(S) = E[F(X_{\bar{S}}, X_S)|X_S] = \int F(X_{\bar{S}}, X_S)P(X_{\bar{S}} \mid X_S) \, dX_{\bar{S}} \ Eq.\,2$$

where:

- $S$: $X_s \equiv \{x_1, x_2, ..., x_S\} \subseteq X$ is a coalition formed by the predictor variables,
- $|S|$ is the number of predictor variables in the coalition $S$,
- $\bar{S}$: $X_{\bar{S}} = \{X\} - \{X_s\}$ is a set of complementary variables to $S$, and
- $P(X_{\bar{S}} \mid X_S)$ is the probability of $X_{\bar{S}}$ conditioned by $X_S$;

To simplify the calculation of the integral, the SHAP method uses the assumption of independence between variables, in other words:

$$P(X_{\bar{S}} \mid X_S) = P(X_{\bar{S}}) \ Eq.\,3$$

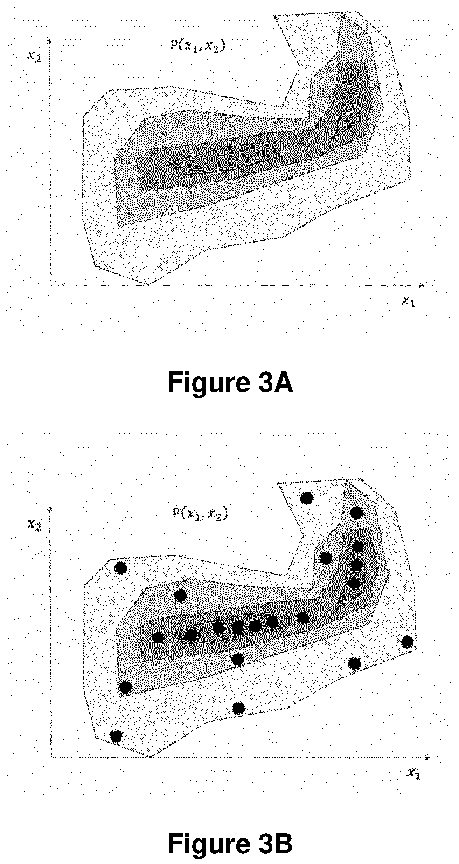

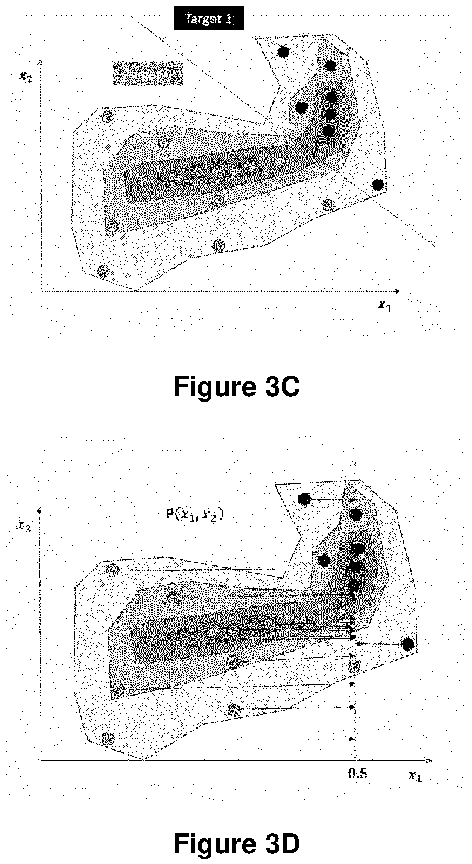

This approximation carried out by the SHAP method, and which is part of the state of the art, makes it possible to greatly simplify the calculation of the "coalition worth" function, sacrificing the quality of the explanation. To understand what this approximation implies, by way of example, reference is made to Figures 3A-3E. Figure 3A shows the joint probability of occurrence $P(x_1,x_2)$ of two predictor variables $x_1,x_2$. The darker areas imply a higher probability of occurrence, the lighter areas imply a lower probability and the white areas imply zero probability of occurrence. Now a data set of 20 elements sampled compatibly with this probability is assumed as shown in Figure 3B. Finally a binary model $y = F(x_1,x_2)$ that is trained on these data is assumed, and after training, the result of Figure 3C is obtained. In this scenario, the "coalition worth" $v(S) = v(x_1 = 0.5)$ is to be estimated using the approximation of independence of variables proposed by SHAP. Assuming independence of variables implies that given a tuple $X = \{x_1,x_2\}$, the value of $x_1$, for example, can be changed without worrying about the value of $x_2$.

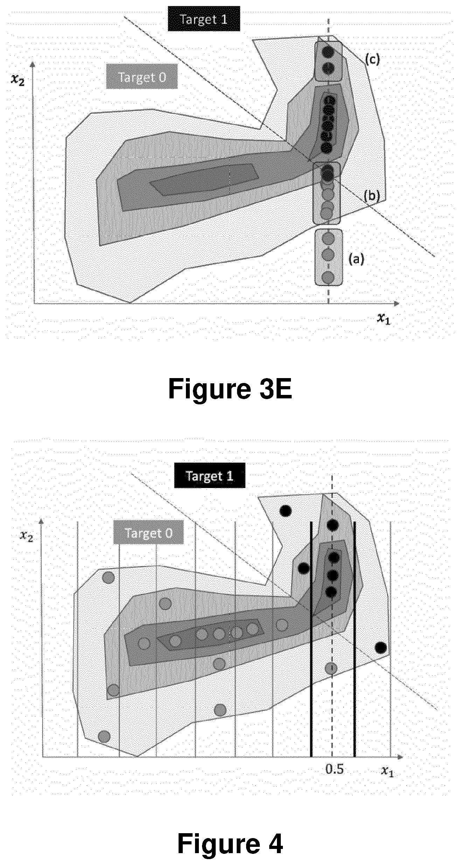

As can be seen in Figure 3D, from the original data (grey circles) new simulated data can be generated, keeping the original value of the variable $x_2$ constant and modifying $x_1 \rightarrow x_1 = 0.5$. Figure 3E shows the result of applying the opaque model $F(x)$ on the new simulated data. The final estimate of $v(S) = v(x_1 = 0.5)$ can finally be obtained by averaging the values of Figure 3E. 9 circles with target=0 and 11 circles with target= 1 are obtained, so that $v(S) = v(x_1 = 0.5) = 11/20$. However, Figure 3E shows some artifacts that make this estimate produced by the SHAP model weak:

- Region (a). By assuming independence between variables, 3 points (out of 20, i.e., 15%) that have zero probability of being sampled and that could be artificially biasing the estimate of $v(S)$ have been artificially created.

- Region (b) has a lighter colour and consequently a lower probability compared to region (c) which has a darker colour. However, there are many more points in region (b) than in region (c). In this case, an artificial (and wrong) bias is also being introduced into the estimate of $v(S)$
- From the previous examples it is evident how the estimate of $v(S)$ strongly depends on the choice of data used as a starting point to generate the artificial data. For computational reasons, in the current implementation of the SHAP method (https://github.com/slundberg/shap), the amount of data used as a starting point is limited to 100 randomly chosen data points. Depending on the underlying problem, 100 data points may not be representative enough.

For these reasons, unlike SHAP, the proposed method estimates $P(X_{\overline{S}} \mid X_S)$ directly (and consequently the $v(S)$ required to obtain the Shapley values) without using the approximation of independence between variables. In order to estimate $v(S)$, the proposed method makes two assumptions:

1. $z' = h(x) = f(discretise(x))$, in other words, the dummy variables used for the explanation are obtained from the discretised version of the variables $x$ used by the opaque model.
2. When generating the explanation, there is access to a statistically relevant historical data set $\{x_1^i, x_2^i, \dots, x_N^i, F(x^i)\}$, i.e., with $i \in [1,K]$ with $K$ large enough considering the problem to be explained.

Using the previous assumptions, the "coalition worth" function $v(S) = E[F(X_{\overline{S}}, X_S)|X_S]$ is estimated, i.e., the expected value of the prediction of the opaque model conditioned by the presence of the coalition variables in the model input, taking only the elements of the data set for which the predictor variables assume the values for which their contribution to the value of the target variable is to be estimated.

In an exemplary embodiment, the proposed method estimates the "coalition worth" function implementing the following equation:

$$v(S) = \frac{\sum_{i=1}^{K} F\left(DX_S^i, DX_{\overline{S}}^i\right) * \delta_{DX_S, DX_S^i}}{\sum_{i=1}^{K} \delta_{DX_S, DX_S^i}} \quad Eq.\,4$$

where: $DX_S^i = discretise(X_S^i)$ is the discretised version of the variables that enter the coalition $S$, $DX_{\overline{S}}^i = discretise(X_{\overline{S}}^i)$ is the discretised version of the variables that do not enter the coalition $S$, $i$ is the index over the historical data set used for the estimates, $K$ is the size of the historical data set used for the estimates, and $\delta_{DX_S, DX_S^i}$ is the Kronecker delta that is equal to 1 when the variables of the coalition of the i-th element of the historical data set assume the values for which their contribution to the value of the target variable is to be estimated. For the historical data set $\{x_1^i, x_2^i, \dots, x_N^i, F(x^i)\}$ to be considered statistically relevant, this must occur a relevant number of times and, specifically, at least 3 times.

Figure 4 shows the differences between SHAP and the method of the present invention, using the same previous example of Figures 3A-3E. The first step is to use the discretised version of the variables $x_1$ y $x_2$. The vertical lines mark the extremes used to discretise the variable $x_1$ and in particular, the thicker lines mark the extremes of the interval associated with $x_1 = 0.5$, i.e., the interval for which the "coalition worth" is to be calculated. All the circles that fall within this interval can be considered $(x_1 \sim 0.5, x_2)$. $Eq.\,4$ calculates $v(S)$ as the average of the prediction of the opaque model $F(X)$ evaluated on the circles that fall in this interval, i.e. $v(S) = v(x_1 = 0.5) = 4/5$. Therefore, the proposed method:

- does not generate artificial data or alter the probability distribution of the underlying problem.
- depends on the amount of data available. A larger amount of data improves the quality of the estimate by increasing the computational load (greater number of examples to filter and average) and vice versa, a smaller amount of data worsens the quality of the explanation and decreases the computational load.

The present invention obtains the local explainability of each of the elements of the data set by calculating a surrogate linear model; where its parameters (Shapley values) indicate the contribution of each of the variables on the decision (target).

In addition, the results offer global explainability, adding the contributions (Shapley values) of each of the elements of the data set. In this way, global explainability of the entire data set and global explainability per target variable (or for each of the decisions made) can be obtained.

The present invention offers these functionalities of global explainability and global explainability per target. Another added value provided by the present invention is the interpretability of the results of the explanation. Working only with categorical or discrete variables (they have a finite number of values) facilitates the understanding of explainability for a human, since they can assign a contribution to each of these values (dummy variables).

The proposed invention can be implemented in hardware, software, firmware or any combination thereof. If it is implemented in software, the functions can be stored in or coded as one or more instructions or code in a computer-readable medium.

As used herein, the computer programme products comprising computer-readable media include all forms of computer-readable media, except to the extent that such media is not considered to be non-established transient propagation signals.

The scope of the present invention is defined in the attached claims.

**Claims**

1. A computer-implemented method for determining the explainability of a data set, the method comprising performing the following steps by at least one processor:

   - receiving or accessing a data set comprising a plurality of elements, wherein each element of the plurality of elements comprises a plurality of variables, of which at least two variables are taken as predictor variables and one variable is considered as a target variable, and wherein the predictor variables are categorical or discretised variables;
   - providing an explanation of how a complex function F(X) generates the target variable from the predictor variables X, using a linear surrogate model:

$$g(Z') = \varphi_0 + \sum_{i=1}^{M} \varphi_i z_i'$$

   that satisfies:

$$F(X) = g(Z') = g(h(X))$$

   where:

   $Z' = h(X)$ is a function that maps the predictor variables X used by the complex function F(X) to be explained with dummy variables $z_i'$ used to generate the explanation,
   M is the number of dummy variables,
   $i$ is the index over the dummy variables,
   $\varphi_i$ are the coefficients of the surrogate model, representing the contribution of the dummy variables $z_i'$ to a result of the surrogate model, and coinciding with Shapley values, calculated as:

$$\varphi_i(v) = \sum_{S \subseteq M\{i\}} \frac{|S|!(M-|S|-1)!}{M!} (v(S \cup \{i\}) - v(S)),$$

   and

$$v(S) = E[F(X_{\bar{S}}, X_S)|X_S],$$

   where:

$S:X_s = \{x_1, x_2, ..., x_S\} \subseteq X$ is a coalition formed by the predictor variables,
$|S|$ is the number of predictor variables in the coalition $S$,
$\overline{S}: X_{\overline{S}} = \{X\} - \{X_s\}$ is a set of complementary variables to $S$,
$v(S)$ is an estimate of the result of the complex function $F(X)$ if it had been generated using only the variables of the coalition S, and
$P(X_{\overline{S}} \mid X_S)$ is the probability of $X_{\overline{S}}$ conditioned by $X_S$;

**characterised in that:**

$v(S)$ is calculated without assuming independence between the predictor variables, taking only the elements of the data set for which the predictor variables assume the values for which their contribution to the value of the target variable is to be estimated, where the data set is large enough for this to happen at least 3 times.

2. The method of claim 1, wherein $v(S)$ is calculated according to the equation:

$$v(S) = \frac{\sum_{j=1}^{K} F\left(DX_S^j, DX_{\overline{S}}^j\right) * \delta_{DX_S, DX_S^j}}{\sum_{j=1}^{K} \delta_{DX_S, DX_S^j}}$$

where:

$DX_S^j = discretise(X_S^j)$ is the discretised version of the variables that enter the coalition S,

$DX_{\overline{S}}^j = discretise(X_{\overline{S}}^j)$ is the discretised version of the variables that do not enter the coalition S,

$K$ is the size of the data set used for the estimates,
$j$ is the index over the data set used for the estimates, and

$\delta_{DX_S, DX_S^j}$ is the Kronecker delta that is equal to 1 when the variables of the coalition of the j-th element of the data set assume the values for which their contribution to the value of the target variable is to be estimated,

and where $K$ is large enough for the Kronecker delta $\delta_{DX_S, DX_S^j}$ to equal 1 at least 3 times.

3. The method according to any one of the preceding claims, wherein the data in the data set comprises tabular data.

4. The method according to any one of the preceding claims, wherein the variables are real data, output data from a machine learning model, output data from a system of rules, output data from a decision system, or combinations thereof.

5. The method according to any one of the preceding claims, wherein the target variable comprises a continuous or categorical variable.

6. A system for local explainability of tabular data, which comprises:

a memory; and
at least one processor adapted and configured for:

- receiving or accessing a data set comprising a plurality of elements, wherein each element of the plurality of elements comprises a plurality of variables, of which at least two variables are taken as predictor variables and one variable is considered as a target variable, and wherein the predictor variables are categorical or discretised variables;
- providing an explanation of how a complex function F(X) generates the target variable from the predictor variables X, using a linear surrogate model:

$$g(Z') = \varphi_0 + \sum_{i=1}^{M} \varphi_i z_i'$$

that satisfies:

$$F(X) = g(Z') = g(h(X))$$

where:

$Z' = h(X)$ is a function that maps the predictor variables X used by the complex function F(X) to be explained with dummy variables $z_i'$ used to generate the explanation,
M is the number of dummy variables,
$i$ is the index over the dummy variables,
$\varphi_i$ are the coefficients of the surrogate model, representing the contribution of the dummy variables $z_i'$ to a result of the surrogate model, and coinciding with Shapley values, calculated as:

$$\varphi_i(v) = \sum_{S \subseteq M\{i\}} \frac{|S|!(M-|S|-1)!}{M!} (v(S \cup \{i\}) - v(S)),$$

and

$$v(S) = E[F(X_{\bar{S}}, X_S)|X_S],$$

where:

$S$: $X_s \equiv \{x_1, x_2, ..., x_S\} \subseteq X$ is a coalition formed by the predictor variables,
$|S|$ is the number of predictor variables in the coalition $S$,
$\bar{S}$: $X_{\bar{S}} = \{X\} - \{X_s\}$ is a set of complementary variables to $S$,
$v(S)$ is an estimate of the result of the complex function F(X) if it had been generated using only the variables of the coalition S, and
$P(X_{\bar{S}} | X_S)$ is the probability of $X_{\bar{S}}$ conditioned by $X_S$;
**characterised in that:**
$v(S)$ is calculated without assuming independence between the predictor variables, taking only the elements of the data set for which the predictor variables assume the values for which their contribution to the value of the target variable is to be estimated, where the data set is large enough for this to happen at least 3 times.

7. The system of claim 6, wherein the processor is adapted and configured for also calculating $v(S)$ according to the equation:

$$v(S) = \frac{\sum_{j=1}^{K} F\left(DX_S^j, DX_{\bar{S}}^j\right) * \delta_{DX_S, DX_S^j}}{\sum_{j=1}^{K} \delta_{DX_S, DX_S^j}}$$

where:

$DX_S^j = discretise(X_S^j)$ is the discretised version of the variables that enter the coalition S,

$$DX_{\bar{S}}^{j} = discretise(X_{\bar{S}}^{j})$$ is the discretised version of the variables that do not enter the coalition S,

$K$ is the size of the data set used for the estimates,

$j$ is the index over the data set used for the estimates, and

$\delta_{DX_S, DX_S^j}$ is the Kronecker delta that is equal to 1 when the variables of the coalition of the j-th element of the data set assume the values for which their contribution to the value of the target variable is to be estimated,

and where $K$ is large enough for the Kronecker delta $\delta_{DX_S, DX_S^j}$ to equal 1 at least 3 times.

8. A computer programme product including code instructions which, when executed in a computer system, implement a method according to any one of claims 1 to 5.

Fig. 1

| Features | | | | | | | | Target Probability | |
|---|---|---|---|---|---|---|---|---|---|
| gender | title | age | family_size | is_alone | embarked | class | ticket_price | SURVIVED | NO_SURVIVED |
| male | Mr | 12_18_years | 3-5 | 0 | S | 3 | Mid | 0.93 | 0.07 |
| female | Mrs | <12_years | 3-5 | 0 | S | 3 | Mid | 0.97 | 0.03 |
| male | Mr | <12_years | 3-5 | 0 | Q | 3 | High | 0.88 | 0.12 |
| female | Mrs | 12_18_years | 2 | 0 | S | 2 | Mid | 0.01 | 0.99 |
| male | Mr | 12_18_years | 1 | 1 | S | 2 | Mid | 0.88 | 0.12 |
| male | Mr | 18_30_years | 3-5 | 0 | C | 1 | High | 0.00 | 0.94 |
| male | rare | >60_years | 2 | 0 | S | 1 | High | 0.12 | 0.88 |
| female | Mrs | 30_60_years | 2 | 0 | Q | 1 | Mid | 0.22 | 0.78 |
| female | Mrs | 18_30_years | 2 | 0 | S | 1 | High | 0.21 | 0.79 |
| male | Mr | 30_60_years | 1 | 1 | S | 1 | Mid | 0.69 | 0.31 |
| male | Mr | 12_18_years | 2 | 0 | C | 1 | High | 0.35 | 0.65 |
| female | rare | 30_60_years | 1 | 1 | C | 1 | High | 0.47 | 0.53 |

# Figure 2

## Figure 3A

## Figure 3B

## Figure 3C

## Figure 3D

# Figure 3E

# Figure 4

Europäisches
Patentamt

European
Patent Office

Office européen
des brevets

# EUROPEAN SEARCH REPORT

Application Number

EP 23 38 2483

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BAPTISTA MARCIA L ET AL: "Relation between prognostics predictor evaluation metrics and local interpretability SHAP values", ARTIFICIAL INTELLIGENCE, ELSEVIER SCIENCE PUBLISHER B.V., AMSTERDAM, NL, vol. 306, 15 February 2022 (2022-02-15), XP086991471, ISSN: 0004-3702, DOI: 10.1016/J.ARTINT.2022.103667 [retrieved on 2022-02-15] * abstract * * page 2 - page 2 * * page 4 - page 18 * ----- | 1-8 | INV. G06N20/00 G06N5/025 |
| A | XINGYU ZHAO ET AL: "BayLIME: Bayesian Local Interpretable Model-Agnostic Explanations", ARXIV.ORG, [Online] 29 May 2021 (2021-05-29), XP081952535, [retrieved on 2023-10-10] * the whole document * ----- | 1-8 | |

TECHNICAL FIELDS
SEARCHED (IPC)

G06N

The present search report has been drawn up for all claims

| Place of search | Date of completion of the search | Examiner |
|---|---|---|
| The Hague | 11 October 2023 | Tsakonas, Athanasios |